# EUROPÄISCHE PATENTSCHRIFT

(11) **EP 0 749 513 B1**
(45) Veröffentlichungstag und Bekanntmachung des Hinweises auf die Patenterteilung: **17.05.2000**
(21) Anmeldenummer: 95906309.0
(22) Anmeldetag: 05.01.1995
(51) Int. Cl.: E05D 3/02, H05B 6/76

(54) **VORRICHTUNG ZUR WÄRMEBEHANDLUNG VON MATERIALIEN IN EINER HEIZKAMMER**
DEVICE FOR HEAT-TREATING MATERIALS IN A HEATING CHAMBER
DISPOSITIF DE TRAITEMENT THERMIQUE DE MATERIAUX DANS UNE CHAMBRE DE CHAUFFE

(43) Veröffentlichungstag der Anmeldung: 27.12.1996
(73) Patentinhaber: LAUTENSCHLÄGER, Werner, 88299 Leutkirch (DE)
(72) Erfinder: LAUTENSCHLÄGER, Werner, 88299 Leutkirch (DE)
(74) Vertreter: Schmidt-Evers, Jürgen, Dipl.-Ing.
(86) Internationale Anmeldenummer: EP9500046
(87) Internationale Veröffentlichungsnummer: WO9621075

(56) Entgegenhaltungen:
- EP-A- 0 145 079
- DE-A- 4 327 381
- US-A- 2 620 509
- US-A- 3 816 688
- US-A- 4 454 686

## Beschreibung

Die Erfindung bezieht sich auf Vorrichtungen nach dem Oberbegriff der Ansprüche 1, 8 oder 9.

Vorrichtungen dieser Art werden zum Auslösen, Fördern und/oder Durchführen von chemischen oder physikalischen Prozessen in Materialien und/oder zum Aufbereiten von Materialien jeweils unter verhältnismäßig hoher Wärme und/oder zum Erwärmen schlechthin von Materialen zu verschiedenen Zwecken eingesetzt.

Es kann sich dabei um Maßnahmen zum Trennen von Materialien und/oder Aufbereiten von Materialien, insbesondere für Analysezwecke und/oder zum Zubereiten von Materialien, z.B. Erwärmen oder Aufbacken von Lebensmitteln für den Verzehr, handeln.

Bei den vorbeschriebenen Maßnahmen kommt es aufgrund der Wärmewirkung und einer Verdampfung des zu erwärmenden Materials bzw. Komponenten des Materials zu einer Druckerhöhung in der Heizkammer, die insbesondere bei einer großvolumigen Heizkammer und einem großflächigen Verschlußelement zu einer Überbelastung und somit Beschädigung der das Verschlußelement in seiner Verschlußstellung haltenden Teile führen kann. Bei einem Druckanstieg in der Heizkammer um nur etwa 0,5 bar, ergibt sich bei einer Beschickungsöffnung von etwa 40 cm x 40 cm eine Druckbelastung von 800 kg auf die Innenfläche des Verschlußelements. Übliche Halterungskonstruktionen für das Verschlußelement sind für eine solche Belastung nicht ausgelegt. Eine solche Auslegung würde auch die Integration der Halterungselemente erschweren und außerdem zu einer nachteiligen und kostenintensiven Bauweise führen.

Die vorbeschriebenen Probleme stellen sich sowohl dann, wenn das Material in besonderen verschließbaren Probenbehältern oder unmittelbar in der Heizkammer behandelt wird. Im ersteren Fall kommt es aufgrund einer Druckerhöhung häufig zu einem Bersten bzw. Explodieren des oder der Probenbehälter, wobei der Druck sich in die Heizkammer fortpflanzt und diese ebenfalls unter Druck setzt. In solchen Vorrichtungen oder Behandlungsfällen, in denen das zu behandelnde Material unmittelbar in die Heizkammer eingegeben wird, wird letztere unmittelbar unter Druck gesetzt.

Die vorbeschriebenen Probleme treten somit sowohl bei gewerblich als auch bei privat benutzten Vorrichtungen der vorliegenden Art auf. Ein Beispiel für eine privat benutzbare Vorrichtung ist zum Beispiel ein Haushalts-Mikrowellenofen, dem die vorbeschriebenen Nachteile ebenfalls anhaften und der aus den vorgenannten Gründen ebenfalls gefährdet ist.

Eine Vorrichtung mit einer entsprechenden Überdrucksicherung zur Vermeidung der oben genannten Probleme ist beispielsweise aus der US 4,454,686 bekannt. Die Vorrichtung zum Behandeln von Materialien unter der Einwirkung von Wärme in einer Heizkammer besteht aus einem die Heizkammer enthaltenden Gehäuse mit einer Beschickungsöffnung für die Heizkammer, die durch eine Tür wahlweise zu öffnen und zu schließen ist. Die Tür ist dabei so gelagen, daß sie beim Überschreiten eines bestimmten Drucks im Innern der Heizkammer von der Beschickungsöffnung abhebt und in eine Entlastungs-Offenstellung bewegbar ist. Hierzu wird die Abdichtung der Beschickungsöffnung und die Überdrucksicherung mittels einer Verschlußplatte bewirkt, die gegen die Beschickungsöffnung vorgespannt ist und diese in Normalstellung abdichtet. Wenn der Druck im Innern der Heizkammer einen bestimmten Wert übersteigt, so wird eine magnetisch festgehaltene Verriegelungsvorrichtung der Tür gelöst, so daß die Arme der Tür aufschwenken können und die Verschlußplatte sich von der Beschickungsöffnung lösen kann. Sowohl die Kopplung zwischen der Verschlußplatte und den Türarmen als auch die magnetisch gehaltene Verriegelungsvorrichtung sind allerdings in ihrem Aufbau sehr kompliziert und damit kostenaufwendig.

Ausgehend von dem genannten Stand der Technik liegt der vorliegenden Erfindung die Aufgabe zugrunde, eine Überdrucksicherung für Vorrichtungen zum Behandeln von Materialien unter der Einwirkung von Wärme und ggf. auch Druck in einer Heizkammer vorzusehen, die wesentlich einfacher in ihrem Aufbau aber mindestens ebenso zuverlässig in ihrer Funktionsweise ist.

Diese Aufgabe wird durch Vorrichtungen mit den Merkmalen der Ansprüche 1, 8 und 9 gelöst.

Alle erfindungsgemäßen Lösungen tragen auf einfache Weise dazu bei, die Vorrichtung vor Überlastung und möglicherweise dem Bersten bzw. Explodieren zu schützen.

Die vorgenannte Aufgabe wird gemäß Anspruch 1 dadurch gelöst, daß die Schwenkgelenke der Tür jeweils eine sich rechtwinklig zur Öffnungsfläche der Beschickungsöffnung erstreckende Stange aufweisen, die quer zur Öffnungsfläche der Beschickungsöffnung verschiebbar gelagert und nach innen vorgespannt ist, und daß am der Tür zugewandten Ende der Stange die Tür schwenkbar gelagert ist. Der Aufbau der erfindungsgemäßen Überdrucksicherung ist gegenüber den bekannten Vorrichtungen wesentlich vereinfacht, da die Überdruckfunktion in den Schwenkgelenken der Tür integriert ist.

Dabei wird die Maximalbelastung der Vorrichtung bzw. der Tür durch die Vorspannkraft der Stange begrenzt, die die Tür in ihre Schließstellung vorspannt. Bei einem die dadurch vorgegebene Druckgröße übersteigenden Innendruck wird die Tür entgegen der Vorspannung des Schwenkgelenks bewegt, wobei ein Öffnungsspalt entsteht, durch den der Druck entweichen kann, wodurch eine Überlastung wirksam verhindert werden kann. Bei einer solchen Ausgestaltung kann mit einem Überdruck im Innern der Heizkammer gearbeitet werden, der geringer als die Vorspannkraft ist.

Vorzugsweise ist auch die an der den Schwenkgelenken gegenüberliegenden Seite angebrachte Verriegelungsvorrichtung der Tür mit einer gleichartigen Überdrucksicherung versehen, so daß sich im Falle eines Überdrucks die Tür parallel von der Beschickungsöffnung abhebt.

Bei der erfindungsgemäßen Vorrichtung nach Anspruch 8 weist das Gehäuse eine Perforierung auf, wobei die Entstehung des Überdrucks dadurch verhindert wird, daß dieser durch die Perforierung entweichen kann. Diese erfindungsgemäße Ausgestaltung eignet sich insbesondere für solche Wärmebehandlungsvorgänge an Materialien, die bei Normaldruck bzw. Raumdruck und/oder bei Unterdruck in der Heizkammer stattfinden.

Bei der erfindungsgemäßen Ausgestaltung nach Anspruch 9 vermindert oder regelt der Drucksensor in der Heizkammer in Verbindung mit einer Steuer- oder Regelvorrichtung die Heizleistung, so daß eine bestimmte Innentemperatur nicht überschritten wird oder die Heizung abschaltet. In allen diesen Fällen wird die Innentemperatur begrenzt oder vermindert, so daß bereits hierdurch eine schädliche oder gefährliche Innendrucksteigerung vermieden wird. Diese erfindungsgemäße Ausgestaltung eignet sich insbesondere für eine Kombination mit der erfindungsgemäßen Ausgestaltung nach Anspruch 1 und/oder 8, und zwar insbesondere dann, wenn die Heizvorrichtung eine Mikrowellen-Heizvorrichtung ist. Bei einer solchen Kombination kann das bewegliche Verschlußelement das druckempfindliche Teil des Drucksensors sein, das eine Abschaltung der Mikrowellenleistung herbeiführt. Hierdurch wird nicht nur die Temperatur in der Kammer gesenkt, sondern es wird auch verhindert, daß Mikrowellen durch den sich bei der Bewegung des Verschlußelements bildenden Spalt zwischen letzterem und dem Gehäuse nach außen entweichen.

In den Unteransprüchen sind Merkmale enthalten, die die Funktionen der Vorrichtung oder die Halterung des Verschlußelements verbessern und zu einfachen, kleinen und kostengünstig herstellbaren Bauweisen führen, die auch eine gezielte Behandlung und besondere Behandlungen des Materials ermöglichen.

Nachfolgend werden die Erfindung und weitere durch sie erzielbare Vorteile anhand bevorzugter Ausführungsbeispiele näher erläutert. Es zeigt:
- Fig. 1: eine erfindungsgemäße Vorrichtung in perspektivischer Seitenansicht;
- Fig. 2: die Vorrichtung nach Anspruch 1 in einer anderen Funktionsstellung;
- Fig. 3: einen vertikalen Teilschnitt durch eine erfindungsgemäße Türhalterung für die Vorrichtung;
- Fig. 4: eine erfindungsgemäße Verriegelungsvorrichtung für die Tür der Vorrichtung; und
- Fig. 5: ein Gehäuse für die Vorrichtung mit Blickrichtung auf die vertikale Beschickungsöffnung.

Die Hauptteile der Vorrichtung 1 sind ein quaderförmiges Gehäuse 2 mit einer frontseitigen Beschickungsöffnung 3, die durch eine Schwenktür 4 wahlweise zu öffnen und zu schließen ist, eine elastisch nachgiebige Halterung 5 für die Schwenktür 4, eine Heizvorrichtung 6, insbesondere eine Mikrowellenheizung, zum Beheizen einer im Gehäuse 2 angeordneten Heizkammer 7 und eine elektrische Steuer- und/oder Regeleinrichtung 8, die durch Steuer- bzw. Signalleitungen mit den zugehörigen Steuer- oder Regelelementen der Vorrichtung 1 verbunden ist und mit automatisch funktionierenden Steuer- und Regelelementen und ggf. mit einer Tastatur zur manuellen Einstellung ausgerüstet ist.

Das Gehäuse 2 ist von quaderförmiger Form und weist eine Bodenwand 9, zwei Seitenwände 11a, 11b, eine Deckwand 12 und eine Rückwand 13 auf, wobei die Frontwand durch die Schwenktür 4 gebildet ist und die frontseitige Beschickungsöffnung 3 in ihrer Schließstellung verschließt.

Die Heizvorrichtung 6 weist ein Magnetron auf, das z.B. auf der Deckwand 12 angeordnet sein kann und die Mikrowellen durch eine Öffnung in die Heizkammer 7 einkoppelt. Das Gehäuse 2 besteht aus Metall, wobei die Schwenktür 4 teilweise auch aus durchsichtigem Material bestehen kann, z.B. Glas. In diesem Falle ist jedoch durch an sich bekannte Maßnahmen (Metallgitter) verhindert, daß Mikrowellen durch das Glas austreten.

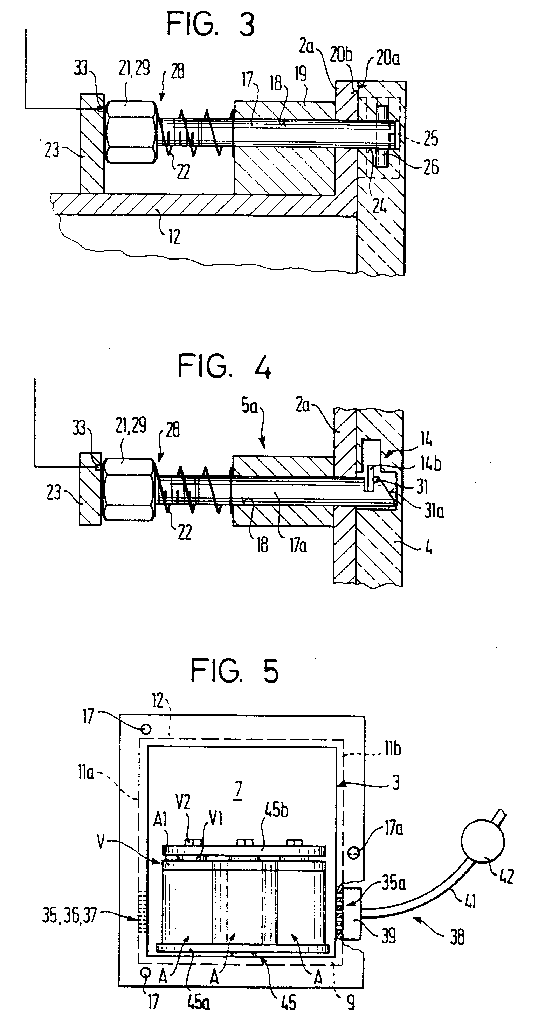

Bei der vorliegenden Ausgestaltung ist die Schwenktür 4 durch zwei, jeweils im Eckenbereich einer Seite angeordnete nachgiebige Gelenkhalterungen 5 schwenkbar gelagen und durch eine auf der anderen Seite angeordnete Verriegelungsvorrichtung 14 mit einem von außen zugänglichen Handgriff 14a und einem in üblicher Weise damit verbundenen vertikal beweglichen Riegel 14b (Fig. 4) verschließbar. Die beiden vorhandenen nachgiebigen Gelenkhalterungen 5 sind einander gleich bzw. bezüglich einer horizontalen Mittelebene spiegelbildlich angeordnet, so daß im folgenden nur die obere nachgiebige Gelenkhalterung 5 aus Vereinfachungsgründen beschrieben zu werden braucht.

Das Gelenk 16 der nachgiebigen Gelenkhalterung 5 besteht aus einem dem Gehäuse 2 zugeordnetem Gelenkteil in Form einer im Querschnitt vorzugsweise kreisrunden Gelenkstange 17, die sich rechtwinklig zur Türebene erstreckt und in einem Führungsloch 18 eines Lagerstücks 19 längs seiner Mittelachse, d.h. ebenfalls rechtwinklig zur Türebene, verschiebbar geführt und gelagert ist. Die Gelenkstange 17 durchsetzt das Lagerstück und überragt es nach hinten, wobei zwischen einem verdickten Stangenkopf 21 und dem Lagerstück 19 eine Druckfeder 22 eingespannt ist, die die Gelenkstange 17 nach hinten gegen einen Anschlag 23, der vorteilhaft durch ein hinter dem Stangenkopf 21 am Gehäuse 2, hier an dessen Deckwand 12 befestigtes Anschlagsstück gebildet sein kann.

Die Gelenkstange 17 überragt die Ebene der Beschickungsöffnung 3 nach vorne und faßt in eine horizontale Gelenkausnehmung 24 der Schwenktür 4 mit Bewegungsspiel ein. Innerhalb der Schwenktür 4 weist die Gelenkstange 17 eine vertikale Gelenkbohrung 25 auf, in der ein Gelenkstift 26 mit Bewegungsspiel gelagert ist, der an der Schwenktür 4 gehalten ist. Die Gelenkausnehmung 24 ist horizontal so groß bemessen, daß die Schwenktür 4 mehr als 90° geschwenkt werden kann, wobei sie mit den horizontalen Begrenzungswänden der Gelenkausnehmung 24 an den beiden vorhandenen Gelenkstangen 17 gelagert ist. Der bzw. die Anschläge 23 sind so positioniert, daß bei Anlage des bzw. der Stangenköpfe 21 aufgrund der Vorspannung der Feder 22 die Schwenktür 4 mit ihrer Anlagefläche 20a an der die Beschickungsöffnung 3 umgebenden Anlagefläche 20b ggf. mittels einer Dichtung (nicht dargestellt) anliegt und dadurch die Heizkammer 7 verschließt. Letztere Anlagefläche 17b kann auch an einem die Beschickungsöffnung 3 umgebenden Flansch 2a angeordnet sein.

Vorzugsweise ist die nachgiebige Gelenkhalterung 5 in eine allgemein mit 28 bezeichnete Justiervorrichtung integriert, die eine Justierung und Feststellung der Schwenktür 4 rechtwinklig zu ihrer Ebene ermöglicht, um sie unter Berücksichtigung vorhandener Toleranzen an die Anlagefläche 20b anpassen zu können. Bei der vorliegenden Ausgestaltung wird die Justiervorrichtung 28 durch eine teleskopierbare Gelenkstange 17 gebildet, wobei deren hinterer Endbereich ein Gewinde aufweist, auf dem eine darauf vorzugsweise sicherbare Gewindemutter 29 aufgeschraubt ist, die das hintere Ende der Gelenkstange 17 geringfügig überragt und somit zur Längseinstellung geeignet ist.

Die nachgiebige Halterung 5 im Bereich der Verriegelungsvorrichtung 14 ist im wesentlichen gleich ausgebildet wie die nachgiebige Halterung 5 im Bereich der Gelenke 16, siehe gleiche Teile mit gleichen Bezugszahlen, wobei jedoch anstelle eines Gelenks 16 am vorderen Ende der Verriegelungsstange 17a eine Verriegelungsausnehmung 31 vorgesehen ist, ggf. mit einer Anlaufschräge 31a des so gebildeten Verriegelungsteils. Die Verriegelungsstange 17a ist in gleicher Weise wie die Gelenkstange 17 justierbar. Der Verriegelungsstange 17a ist - sofern sie rund ist - eine Drehsicherung zuzuordnen, da sie nicht wie die Gelenkstange 17 durch den Gelenkstift 26 in der Tür drehgesichert ist.

Bei der vorbeschriebenen Ausgestaltung sind die nachgiebigen Gelenkhalterungen auf der Deckwand 12 bzw. unter der Bodenwand 9 angeordnet und daran befestigt, und die nachgiebige Verriegelungsvorrichtung 14 ist außenseitig auf der zugehörigen Seitenwand 11b befestigt. Im Rahmen der Erfindung sind jedoch auch andere Anordnungen möglich, z.B. können die beiden Gelenkhalterungen 5 innen- oder außenseitig auf der zugehörigen Seitenwand 11a befestigt oder darin integriert sein.

Im Rahmen der Erfindung ist es möglich, einen nicht dargestellten Deckel oder eine oberseitig angeordnete Schwenktür (nicht dargestellt) entsprechend zu halten und zu lagern.

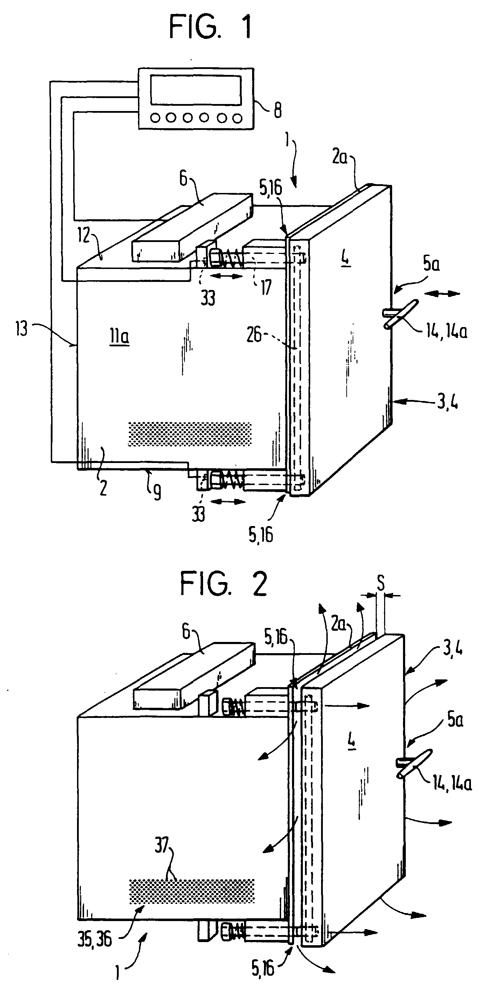

Für einen Wärmebehandlungsvorgang eines Materials wird dieses vorzugsweise in wenigstens einem Aufnahmebehälter A (Fig. 5) in die Heizkammer 7 gestellt und die Heizvorrichtung 6 eingeschaltet, wobei das Material durch die Mikrowellen unmittelbar oder auch mittelbar erhitzt wird, was an sich bekannt ist. Dabei auftretende Verdampfungen und damit verbundene Temperatur- und/oder Druckerhöhungen können in der Heizkammer 7 auf eine solche Größe steigen, daß die entsprechend einem bestimmten Druckwert bemessenen und eine entsprechende Vorspannung ausübenden Druckfedern 22 überdrückt werden und die Schwenktür 4 von der Anlagefläche 17b abhebt. Hierdurch entsteht ein in Fig. 2 dargestellter Spalt S, durch den ein einen vorbestimmten Druckwert übersteigender Überdruck nach außen entweichen kann. Hierdurch ist die Belastung der Schwenktür 4 und deren Halterung und Verriegelung auf einen Wert begrenzt, so daß diese Teile bezüglich ihrer Festigkeit nur so stabil bemessen zu Werden brauchen, daß sie die Beanspruchung bei dem vorbestimmten Druckwert aufnehmen können. Dies gilt natürlich auch für das Gehäuse 2, weil ein höherer Innendruck nicht entstehen kann.

Es ist auch vorteilhaft, der Heizkammer 7 einen Drucksensor zuzuordnen, der den Innendruck überwacht und bei einem Innendruck, der gleich dem vorbestimmten Druckwert oder auch einem geringeren Druckwert entsprechen kann, die Heizvorrichtung 6 und insbesondere eine Mikrowellen-Heizvorrichtung abschaltet, so daß keine Mikrowellen durch den Spalt S nach außen entweichen.

Der Spalt S beträgt etwa ein bis mehrere, z.B. etwa fünf mm.

Ein vorgenannter Drucksensor kann in vorteilhafter Weise die Position der Schwenktür 4 oder Anbauteile derselben überwachen und bei einer Bewegung ein Signal an die Steuereinrichtung 8 abgeben. Bei der vorliegenden Ausgestaltung sind zwei Drucksensoren durch Schalter oder Mikroschalter 33 gebildet, die vorzugsweise zwischen den Anschlagstücken 23, insbesondere darin oder daran ein- oder angebaut und den rückseitigen Enden der Gelenkstangen 17 zugeordnet sind und beim Abheben der Schwenktür 4 ein Signal abgeben.

Die Teile der nachgiebigen Gelenkhalterung 5 und Verrriegelungshalterung 5a können aus Metall bestehen.

Bei den vorbeschriebenen Ausführungsbeispielen können anstelle oder zusätzlich zu der elastisch nachgiebigen Türhalterung in einer Wand oder in einer oder in beiden Seitenwänden 11a, 11b eine Perforierung 35 in einem Teilbereich 36 der zugehörigen Wand vorgesehen sein. Der Teilbereich 36 befindet sich vorzugsweise im unteren Bereich des Gehäuses. Die Perforierung besteht aus einer Vielzahl von Löchern 37, deren Querschnittsgröße unter Berücksichtigung der Dicke der Wandung und der Wellenlänge der Mikrowellen so groß bemessen ist, daß keine Mikrowellen durch die Löcher 37 austreten. Bei der vorliegenden Ausgestaltung sind runde Löcher vorgesehen, deren Querschnittsgröße bzw. Durchmesser 2 bis 4 mm beträgt. Die Wandung der Seitenwand 11a und auch 11b kann dabei etwa 1 mm betragen.

Die Anzahl der Löcher 37 ist so zu bemessen, daß bei einem zu erwartenden spontanen Druckanstieg der Druck durch die Löcher 37 entweichen kann, ohne daß die Vorrichtung 1 Schaden nimmt oder einen bestimmten Druckwert übersteigt. Bei dieser Ausgestaltung ist eine Behandlung des Materials in der Heizkammer 7 im wesentlichen nur bei Normal- bzw. Raumdruck möglich.

Die Perforation 35 eignet sich jedoch auch vorteilhaft in Kombination mit einer elastisch nachgiebig gehaltenen Schwenktür 4, wenn die Perforation nur so groß bemessen ist, daß trotz der Perforation ein den vorbestimmten Druckwert übersteigender Druck in der Heizkammer 7 entstehen kann, der das vorbeschriebene Abheben der Tür 4 bewirkt.

Die Perforierung 35 kann auch Teil eines Belüftungssystems 38 für die Heizkammer 7 sein. In diesem Falle ist an einer anderen Stelle des Gehäuses 2, vorzugsweise gegenüberliegend, z.B. in der anderen Seitenwand 11b, eine zweite Perforierung 35a in entsprechender Weise vorgesehen, wobei eine der Perforierungen, hier die Perforierung 35a an eine Saug- oder Druckvorrichtung für Luft oder ein Gas, z.B. ein inertes Gas, vorgesehen ist. Gemäß Fig. 5 ist die Perforierung 35a mittels eines Sammlers 39 und einer damit verbundenen Rohr- oder Schlauchleitung 41 mit einer Pumpe 42 verbunden, die Raumluft oder ein Gas aus einer Gasquelle durch Saugen oder Drücken durch die Heizkammer 7 fördert. Hierbei kann es auch um eine Kühl- und/oder Spüleinrichtung für die Heizkammer 7 handeln. Insbesondere im Falle einer Spüleinrichtung zur Abförderung von Dämpfen aus der Heizkammer 7 ist es vorteilhaft, die Abführungsleitung an einen Kamin oder eine Vorrichtung zum Analysieren der Dämpfe anzuschließen.

Bei der Ausgestaltung nach Fig. 5 können ein oder mehrere Aufnahmebehälter A vorgesehen sein, die jeweils durch einen Behälterdeckel A1 dicht verschließbar sind und denen jeweils ein Überdruckventil V zugeordnet ist, das bei einem einen vorbestimmten Wert übersteigenden Behälterdruck öffnet. Vorzugsweise ist der zugehörige Ventilkörper der Behälterdeckel A1 selbst, der durch ein Federelement V1 in seine Schließstellung vorgespannt ist, z.B. durch ein einstellbares Druckteil, vorzugsweise in Form einer Einstellschraube V2.

Bei der Ausgestaltung gemäß Fig. 5 ist ein durch einen nicht dargestellten Antrieb drehbares oder hin und her schwenkbares Karussell 45 mit einer Tragscheibe 45a und einer Deckscheibe 45b vorgesehen, wobei in letzterer die Einstellschrauben V2 vertikal eingeschraubt und vorzugsweise von oben zugänglich sind. Zwischen den Einstellschrauben V2 und der Tragscheibe 45a sind die Aufnahmebehälter A mit den vorzugsweise darauf angeordneten Federelementen V1 eingespannt.

## Patentansprüche

1. Vorrichtung (1) zum Behandeln von Materialien unter der Einwirkung von Wärme und ggf. auch Druck in einer Heizkammer (7),
bestehend aus einem die Heizkammer (7) enthaltenden Gehäuse (2) mit einer Beschickungsöffnung (3) für die Heizkammer (7) und einer Tür (4) zum wahlweisen Öffnen und Schließen der Beschickungsöffnung (3), und einer Heizvorrichtung (6) für die Heizkammer (7),
wobei die Tür (4) an einer Seite wenigstens ein Schwenkgelenk (16) zum schwenkbaren Lagern der Tür (4) aufweist, und wobei die Tür (4) derart gelagert ist, daß sie beim Überschreiten eines bestimmten Drucks in der Heizkammer (7) von der Beschickungsöffnung (3) abhebt und in eine Entlastungs-Offenstellung bewegbar ist, aus der sie nach Druckabbau automatisch oder durch Krafteinwirkung wieder in die Ursprungs-Schließstellung zurückbewegbar ist,
**dadurch gekennzeichnet,**
daß das oder die Schwenkgelenk(e) (16) jeweils eine sich rechtwinklig zur Öffnungsfläche der Beschickungsöffnung (3) erstreckende Stange (17) aufweist bzw. aufweisen, die quer zur Öffnungsfläche der Beschickungsöffnung (3) verschiebbar gelagert und nach innen vorgespannt ist, und
daß am der Tür (4) zugewandten Ende der Stange (17) die Tür (4) schwenkbar gelagert ist.

2. Vorrichtung nach Anspruch 1,
**dadurch gekennzeichnet,**
daß an der dem oder den Schwenkgelenk(en) (16) gegenüberliegenden Seite der Tür (4) eine Verriegelungsvorrichtung (14) vorgesehen ist, die ebenfalls eine sich rechtwinklig zur Öffnungsfläche der Beschickungsöffnung (3) erstreckende Stange (17a) aufweist, die quer zur Öffnungsfläche der Beschickungsöffnung (3) verschiebbar gelagert und nach innen vorgespannt ist.

3. Vorrichtung nach Anspruch 1 oder 2,
**dadurch gekennzeichnet,**
daß die Stange (17, 17a) mittels einer Feder (22) in Richtung auf die Öffnungsfläche der Beschickungsöffnung (3) gegen einen Anschlag (23) vorgespannt ist.

4. Vorrichtung nach einem der vorhergehenden Ansprüche,
**dadurch gekennzeichnet,**
daß die Tür (4) elastisch in ihre Schließstellung vorgespannt ist.

5. Vorrichtung nach einem der vorhergehenden Ansprüche,
**dadurch gekennzeichnet,**
daß das oder die Schwenkgelenk(e) (16) und/oder die Verriegelungsvorrichtung (14) eine Justiervorrichtung (28) zum Justieren der Stange (17, 17a) quer zur Öffnungsfläche der Beschickungsöffnung (3) aufweist bzw. aufweisen.

6. Vorrichtung nach Anspruch 5,
**dadurch gekennzeichnet,**
daß die Justiervorrichtung (28) aus einem an dem der Beschickungsöffnung (3) zugewandten Ende der Stange (17, 17a) vorgesehenen Gewinde und einer auf dem Gewinde aufgeschraubten Gewindemutter (29) besteht.

7. Vorrichtung nach einem der vorhergehenden Ansprüche,
**dadurch gekennzeichnet,**
daß dem oder den Schwenkgelenk(en) (16) und/oder der Verriegelungsvorrichtung (14) ein Sensor (33) zugeordnet ist, der beim Abheben der Tür (4) von der Beschickungsöffnung (3) ein Signal zum Abschalten der Heizvorrichtung (6) an eine zugehörige Steuervorrichtung (8) liefert.

8. Vorrichtung (1) zum Behandeln von Materialien unter der Einwirkung von Wärme und ggf. auch Druck in einer Heizkammer (7),
bestehend aus einem die Heizkammer (7) enthaltenden Gehäuse (2) mit einer Beschickungsöffnung (3) für die Heizkammer (7) und einer Tür (4) zum wahlweisen Öffnen und Schließen der Beschickungsöffnung (3), und einer Mikrowellen-Heizvorrichtung (6), für die Heizkammer (7),
**dadurch gekennzeichnet,**
daß das Gehäuse (2) eine Perforierung (35) aufweist, deren Löcher (37) unter Berücksichtigung der Dicke der die Löcher (37) aufweisenden Gehäusewand (11a, 11b) und/oder der Wellenlänge der Mikrowellen so groß bemessen sind, daß keine Mikrowellen durch die Löcher (37) austreten.

9. Vorrichtung nach Anspruch 8,
**dadurch gekennzeichnet,**
daß in wenigstens zwei, vorzugsweise einander gegenüberliegenden Wänden (11a, 11b) des Gehäuses (2) eine Perforierung (35) vorgesehen ist, und daß einer Perforierung (35a) eine Belüftungsvorrichtung (38) für ein Gas oder Luft für die Heizkammer (7) zugeordnet ist.

10. Vorrichtung (1) zum Behandeln von Materialien unter der Einwirkung von Wärme und ggf. auch Druck in einer Heizkammer (7),
bestehend aus einem die Heizkammer (7) enthaltenden Gehäuse (2) mit einer Beschickungsöffnung (3) für die Heizkammer (7) und einer Tür (4) zum wahlweisen Öffnen und Schließen der Beschickungsöffnung (3), einer Heizvorrichtung (6) für die Heizkammer (7), und einem der Heizkammer (7) zugeordneten Drucksensor (33),
**dadurch gekennzeichnet,**
daß der Vorrichtung (1) eine Steuer- oder Regelvorrichtung (8) zugeordnet ist, die bei Überschreitung eines bestimmten Druckwertes in der Heizkammer (7) die Heizleistung reduziert oder so regelt, daß der Druck einen bestimmten Druckwert nicht überschreitet oder die Heizvorrichtung (6) abschaltet.

11. Vorrichtung nach Anspruch 10,
**dadurch gekennzeichnet,**
daß der Drucksensor (33) zur Erzeugung eines Steuersignals für die Steuerung oder Regelung der Heizleistung die Bewegung der Tür (4) ermittelt.

## Claims

1. Device (1) for treating materials under the action of heat and optionally also pressure in a heating chamber (7),
comprising a housing (2), which contains the heating chamber (7) and has a charging aperture (3) for the heating chamber (7) and a door (4) for selectively opening and closing the charging aperture (3), and a heating device (6) for the heating chamber (7), wherein the door (4) at one side comprises at least one swivel joint (16) for pivotally supporting the door (4), and wherein the door (4) is supported in such a way that, when a specific pressure is exceeded in the heating chamber (7), said door lifts off the charging aperture (3) and is movable into an open relief position, from which after pressure reduction it is movable automatically or by the action of force back into the original closed position,
**characterized in that**
the swivel joint or joints (16) each comprise a rod (17), which extends at right angles to the opening surface of the charging aperture (3) and which is supported so as to be displaceable at right angles to the opening surface of the charging aperture (3) and is preloaded in an inward direction, and
that the door (4) is pivotally supported on the end of the rod (17) directed towards the door (4).

2. Device according to claim 1,
**characterized in that**
at the opposite side of the door (4) to the swivel joint or joints (16) a locking device (14) is provided, which likewise comprises a rod (17a), which extends at right angles to the opening surface of the charging aperture (3) and is supported so as to be displaceable at right angles to the opening surface of the charging aperture (3) and is preloaded in an inward direction.

3. Device according to claim 1 or 2,
**characterized in that**
the rod (17, 17a) is preloaded by means of a spring (22) in the direction of the opening surface of the charging aperture (3) against a stop (23).

4. Device according to one of the preceding claims,
**characterized in that**
the door (4) is preloaded resiliently into its closed position.

5. Device according to one of the preceding claims,
**characterized in that**
the swivel joint or joints (16) and/or the locking device (14) comprises or comprise an adjusting device (28) for adjusting the rod (17, 17a) at right angles to the opening surface of the charging aperture (3).

6. Device according to claim 5,
**characterized in that**
the adjusting device (28) comprises a thread, which is provided at the end of the rod (17, 17a) directed towards the charging aperture (3), and a threaded nut (29) screwed on the thread.

7. Device according to one of the preceding claims,
**characterized in that**
associated with the swivel joint or joints (16) and/or the locking device (14) is a sensor (33) which, when the door (4) lifts off the charging aperture (3), supplies a signal for disconnection of the heating device (6) to an associated control device (8).

8. Device (1) for treating materials under the action of heat and optionally also pressure in a heating chamber (7),
comprising a housing (2), which contains the heating chamber (7) and has a charging aperture (3) for the heating chamber (7) and a door (4) for selectively opening and closing the charging aperture (3), and a microwave heating device (6) for the heating chamber (7),
**characterized in that**
the housing (2) has a perforation (35), the size of the holes (37) of which, taking account of the thickness of the housing wall (11a, 11b) having the holes (37) and/or the wavelength of the microwaves, is so selected that no microwaves escape through the holes (37).

9. Device according to claim 8,
**characterized in that**
a perforation (35) is provided in at least two, preferably mutually opposing walls (11a, 11b) of the housing (2), and that associated with one perforation (35a) is a ventilation device (38) for a gas or air for the heating chamber (7).

10. Device (1) for treating materials under the action of heat and optionally also pressure in a heating chamber (7),
comprising a housing (2), which contains the heating chamber (7) and has a charging aperture (3) for the heating chamber (7) and a door (4) for selectively opening and closing the charging aperture (3), a heating device (6) for the heating chamber (7), and a pressure sensor (33) associated with the heating chamber (7),
**characterized in that**
associated with the device (1) is a control or regulating device (8) which, when a specific pressure value is exceeded in the heating chamber (7), reduces or regulates the heating power in such a way that the pressure does not exceed a specific pressure value or switches off the heating device (6).

11. Device according to claim 10,
**characterized in that**
the pressure sensor (33) detects the movement of the door (4) for producing a control signal for control or regulation of the heating power.

## Revendications

1. Dispositif (1) destiné au traitement de matériaux sous l'effet de la chaleur et éventuellement sous l'effet de la pression dans une chambre de chauffage (7), dispositif constitué par un logement (2) contenant la chambre de chauffage (7) avec une ouverture d'alimentation ou de chargement (3) pour la chambre de chauffage (7) et une porte (4) pour ouvrir et fermer sélectivement l'ouverture d'alimentation ou de chargement (3), et un dispositif de chauffage (6) pour la chambre de chauffage (7), la porte (4) présentant au moins une articulation pivotante (16) pour le positionnement pivotant de la porte (4) et moyennant quoi, la porte étant positionnée de telle sorte qu'en cas de dépassement d'une pression déterminée dans la chambre de chauffage (7) elle se soulève de l'ouverture d'alimentation ou de chargement (3) et peut se déplacer sur une position d'ouverture - décharge, position à partir de laquelle après la réduction de la pression ou sous l'effet d'une force, elle pourra de nouveau est ramenée sur la position de fermeture d'origine,
caractérisé en ce que
la ou les articulations pivotantes (16) comporte(nt) chaque fois une barre ou tige (17) s'étendant perpendiculairement par rapport à la surface d'ouverture de l'ouverture d'alimentation (3) qui est positionnée et précontrainte de façon à pouvoir se déplacer transversalement par rapport à la surface d'ouverture de l'ouverture d'alimentation (3).

2. Dispositif selon la revendication 1,
caractérisé en ce que
sur le côté de la porte (4) opposé à la ou aux articulation(s) pivotante(s) (16), il est prévu un dispositif de verrouillage (14) qui présente également une tige (17a) s'étendant perpendiculairement à la surface d'ouverture de l'ouverture d'alimentation (3) et qui est positionnée transversalement par rapport à la surface d'ouverture de l'ouverture d'alimentation (3).

3. Dispositif selon la revendication 1 ou 2,
caractérisé en ce que
la tige (17,17a) est précontrainte au moyen d'un ressort (22) dans la direction de la surface d'ouverture de l'ouverture d'alimentation (3) contre une butée (23).

4. Dispositif selon l'une des revendications précédentes,
caractérisé en ce que
la porte (6) est précontrainte de façon élastique dans sa position de fermeture.

5. Dispositif selon l'une des revendications précédentes,
caractérisé en ce que la ou les articulations pivotantes (16) et/ou le dispositif de verrouillage (14) comporte(nt) un dispositif de réglage (28) servant à ajuster la tige (17,17a) transversalement par rapport à la surface d'ouverture de l'ouverture d'alimentation (3).

6. Dispositif selon la revendication 5,
caractérisé en ce que
le dispositif de réglage (28) consiste en un filetage prévu sur l'extrémité de la tige (17,17a) dirigée vers l'ouverture d'alimentation (3) et en un écrou fileté (29) vissé sur le filetage.

7. Dispositif selon l'une des revendications précédentes,
caractérisé en ce que
un capteur (33) est affecté à ou aux articulation(s) pivotante(s) (14) et/ou au dispositif de verrouillage (14) qui, lors du soulèvement de la porte (4) de l'ouverture d'alimentation (3), émet un signal à destination d'un dispositif de commande approprié (8) pour la coupure du dispositif de chauffage (6).

8. Dispositif (1) pour le traitement des matériaux sous l'effet de la chaleur et éventuellement aussi de la pression sur une chambre de chauffage (7), constitué par un logement (2) contenant la chambre de chauffage (7) avec une ouverture d'alimentation ou de chargement (3) pour la chambre de chauffage (7) et une porte (4) pour ouvrir et fermer sélectivement l'ouverture d'alimentation ou de chargement (3) et un dispositif de chauffage par micro-ondes (6) pour la chambre de chauffage (7), caractérisé en ce que
le logement (2) présente une perforation (35) dont les trous (37) compte tenu de l'épaisseur de la paroi de logement (11a,11b) comportant ces trous (37) et/ou de la longueur d'ondes des micro-ondes sont dimensionnés de telle sorte qu'aucune micro-onde ne puisse sortir par les trous (37).

9. Dispositif selon la revendication 8,
caractérisé en ce que
dans au moins deux parois (11a,11b) du logement (2), parois de préférence dirigées en regard l'une de l'autre, est ménagée une perforation (35) et en ce qu'à une perforation (35a) est affecté un dispositif de ventilation (38) pour un gaz ou l'air pour la chambre de chauffage (7).

10. Dispositif (1) pour le traitement de matériaux sous l'effet de la chaleur et éventuellement aussi de la pression dans une chambre de chauffage (7),
constitué par un logement (2) contenant la chambre de chauffage (7) avec une ouverture d'alimentation ou de chargement (3) pour la chambre de chauffage (7) et une porte (4) pour ouvrir et fermer sélectivement l'ouverture d'alimentation ou de chargement (3), un dispositif de chauffage (6) pour la chambre de chauffage (7) et un capteur de pression (33) affecté à la chambre de chauffage (7),
caractérisé en ce que
un dispositif de régulation et de commande (8) est affecté au dispositif (1) qui, lors du dépassement d'une valeur de pression prédéterminée dans la chambre de chauffage (7) régule ou réduit la capacité de chauffage de telle sorte que la pression ne dépasse pas une valeur de pression prédéterminée ou coupe le dispositif de chauffage (6).

11. Dispositif selon la revendication 10,
caractérisé en ce que
le capteur de pression (33) détermine le déplacement de la porte (4) pour la génération d'un signal de commande pour la commande ou la régulation de la capacité de chauffage.
